# EUROPÄISCHE PATENTSCHRIFT

(11) **EP 3 884 570 B1**
(45) Veröffentlichungstag und Bekanntmachung des Hinweises auf die Patenterteilung: **08.03.2023**
(21) Anmeldenummer: 19808802.3
(22) Anmeldetag: 22.11.2019
(51) Int. Cl.: H02K 15/04

(54) **VERFAHREN ZUR HERSTELLUNG EINER ENDLOS-WELLENWICKLUNG, ENDLOS-WELLENWICKLUNG, STATOR UND ELEKTRISCHE MASCHINE**
METHOD FOR PRODUCING AN ENDLESS WAVE WINDING, ENDLESS WAVE WINDING, STATOR AND ELECTRICAL MACHINE
PROCÉDÉ DE FABRICATION D'UN ENROULEMENT ONDULÉ CONTINU, ENROULEMENT ONDULÉ CONTINU, STATOR ET MACHINE ÉLECTRIQUE

(30) Priorität: 23.11.2018 DE 102018220178
(43) Veröffentlichungstag der Anmeldung: 29.09.2021
(73) Patentinhaber: Vitesco Technologies Germany GmbH, 93055 Regensburg (DE)
(72) Erfinder: ROSSMANN, Andy, 81737 München (DE); LEOPOLD, Lennart, 81737 München (DE)
(74) Vertreter: Vitesco Technologies
(86) Internationale Anmeldenummer: PCT/EP2019/082303
(87) Internationale Veröffentlichungsnummer: WO 2020/104683

(56) Entgegenhaltungen:
- EP-B1- 1 639 688
- DE-A1-102015 120 963
- JP-A- 2010 200 547
- US-A1- 2006 022 547
- US-A1- 2010 259 124

## Beschreibung

Die Erfindung betrifft ein Verfahren zur Herstellung einer Endlos-Wellenwicklung für einen Stator einer elektrischen Maschine. Weiterhin betrifft die Erfindung eine Endlos-Wellenwicklung für einen Stator einer elektrischen Maschine. Zudem betrifft die Erfindung einen Stator mit einer Endlos-Wellenwicklung sowie eine elektrische Maschine mit einem Stator.

Bei einer Anordnung mehrerer Lagen einer Endlos-Wellenwicklung, bei der die elektrischen Leiter der Endlos-Wellenwicklung über die jeweiligen Lagen einstückig, also fortlaufend, ausgebildet sind, wurde beobachtet, dass es im Bereich eines Lagensprungs bei mehrlagigen Wellenwicklungen, insbesondere bei vier-, sechs-, und/oder achtlagigen Wellenwicklungen zu einem ungewollten Vertauschen der Teilwicklungen kommen kann. Dieses ungewollte Vertauschen der elektrischen Leiter bzw. Teilwicklungen kann dazu führen, dass die elektrische Maschine ein asymmetrisches Magnetfeld und somit eine reduzierte Leistung aufweist.

Die JP 2010 200 547 A beschreibt ein Verfahren zur Herstellung einer Endlos-Wellenwicklung gemäß dem Oberbegriff des Patentanspruchs 1.

Die US 2010 259 124 A1 beschreibt ein Verfahren zur Herstellung einer Endlos-Wellenwicklung, wobei in einer ersten Ebene die Wicklungsabfolge der nebeneinander angeordneten elektrischen Leiter stets gleich ist. In einer zweiten Ebene ist ebenfalls die Wicklungabfolge der nebeneinander angeordneten elektrischen Leiter gleich, wobei jedoch im Vergleich zur ersten Lage die Reihenfolge der elektrischen Leiter der zweiten Lage entgegengesetzt orientiert sind.

Die US 2006 022 547 A1 beschreibt ein Verfahren zur Herstellung einer Endlos-Wellenwicklung, bei dem die nebeneinander angeordneten elektrischen Leiter um ein Wickelschwert aufgewickelt sind.

Es ist eine Aufgabe der Erfindung, ein Verfahren zur Herstellung einer Endlos-Wellenwicklung bereitzustellen, mit der die Herstellungskosten reduziert werden können und die Leistungsfähigkeit einer die Endlos-Wellenwicklung aufweisenden elektrischen Maschine erhöht werden kann. Ebenso ist es die Aufgabe eine entsprechende Endlos-Wellenwicklung herzustellen, sowie einen Stator mit der Endlos-Wellenwicklung anzugeben.

Die Aufgabe wird gelöst durch den Gegenstand der unabhängigen Patentansprüche. Bevorzugte Weiterbildungen der Erfindung sind in den Unteransprüchen, in der Beschreibung und den Zeichnungen angegeben, wobei jedes Merkmal sowohl einzeln als auch in Kombination einen Aspekt der Erfindung darstellen kann.

Erfindungsgemäß ist ein Verfahren zur Herstellung einer Endlos-Wellenwicklung für einen Stator einer elektrischen Maschine vorgesehen, umfassend die Schritte:
- Bereitstellen eines Wickelschwerts, das eine Längsachse aufweist, und parallel zur Längsachse eine erste Kante und eine zweite Kante angeordnet sind, wobei die erste Kante und die zweite Kante zueinander beabstandet ausgebildet sind;
- Bereitstellen einer Mehrzahl elektrischer Leiter;
- Wickeln der elektrischen Leiter um das Wickelschwert, wobei die elektrischen Leiter an und/oder durch die erste Kante und die zweite Kante umgelenkt werden, und eine Mehrzahl von Wicklungsabfolgen, in Längsrichtung des Wickelschwerts nebeneinander ausgebildet werden, in einer Wicklungsabfolge, die Mehrzahl der elektrischen Leiter in Längsrichtung des Wickelschwerts nebeneinander angeordnet werden, die Mehrzahl der Wicklungsabfolgen wenigstens eine erste Abfolge und eine zweite Abfolge aufweisen, in der ersten Abfolge die Mehrzahl der elektrischen Leiter in einer ersten Reihenfolge nebeneinander angeordnet werden, und in der zweiten Abfolge die Mehrzahl der elektrischen Leiter in einer von der ersten Reihenfolge zumindest teilweise verschiedenen zweiten Reihenfolge nebeneinander angeordnet werden, oder die Reihenfolge der elektrischen Leiter der ersten Abfolge und der zweiten Abfolge gleich sind, wobei eine Wickelrichtung der ersten Abfolge verschieden von der Wickelrichtung der zweiten Abfolge ist, wobei ein mehrteilig ausgebildetes Wickelschwert mit einem ersten Abschnitt und einem an den ersten Abschnitt in axialer Richtung des Wickelschwerts angrenzenden zweiten Abschnitt bereitgestellt wird, bei der Wicklung der elektrischen Leiter um das Wickelschwert der erste Abschnitt und der zweite Abschnitt in einer Ebene angeordnet sind, und die Längsachse des ersten Abschnitts und die Längsachse des zweiten Abschnitts parallel zueinander angeordnet sind, und zur Ausbildung der zweiten Abfolge der erste Abschnitt und/oder der zweite Abschnitt um deren jeweilige Längsrichtung verschwenkt werden, so dass die Längsachse des ersten Abschnitts mit der Längsachse des zweiten Abschnitts fluchtet, und die Summe der Verschwenkung des ersten Abschnitts und des zweiten Abschnitts 180° beträgt.

Mit anderen Worten ist es ein Aspekt der vorliegenden Erfindung, dass ein Verfahren zur Herstellung einer Endloswellenwicklung für einen Stator einer elektrischen Maschine angegeben wird. Bei diesem Verfahren wird in einem ersten Schritt ein Wickelschwert bereitgestellt. Das Wickelschwert kann als scheibenförmiges Element ausgebildet sein. Es weist eine Längsachse auf. Parallel zur Längsachse verläuft eine erste Kante und eine zur ersten Kante beabstandet angeordnete zweite Kante. Die erste Kante und die zweite Kante verlaufen somit ebenfalls parallel.

In einem zweiten Schritt wird eine Mehrzahl elektrischer Leiter bereitgestellt. Die Mehrzahl der elektrischen Leiter ist eine gerade Anzahl. Vorzugsweise werden 4, 6, 8, 10, 12, 14, 16, 18 oder 20 elektrische Leiter bereitgestellt. Denkbar ist, dass die Anzahl der elektrischen Leiter auch größer als 20 ist. Diese können vorzugsweise über eine Vorrichtung ausgegeben werden, so dass die elektrischen Leiter nebeneinander angeordnet sind. Nebeneinander bedeutet, dass diese direkt aneinander anliegen oder einen Abstand zueinander aufweisen.

In einem dritten Schritt werden die elektrischen Leiter um das Wickelschwert gewickelt, wobei die elektrischen Leiter an und/oder durch die erste Kante und die zweite Kante umgelenkt werden. Die elektrischen Leiter werden mehrfach um das Wickelschwert gewickelt, so dass eine Mehrzahl von Wicklungsabfolgen, entlang der Längsrichtung des Wickelschwerts nebeneinander ausgebildet wird. Eine einzelne Wicklungsabfolge weist somit die Mehrzahl der elektrischen Leiter auf, die in Längsrichtung des Wickelschwerts nebeneinander angeordnet werden. Die Mehrzahl der Wicklungsabfolgen umfasst wenigstens eine erste Abfolge und eine zweite Abfolge. In der ersten Abfolge wird die Mehrzahl der elektrischen Leiter in einer ersten Reihenfolge nebeneinander angeordnet. In der zweiten Abfolge wird die Mehrzahl der elektrischen Leiter in einer von der ersten Reihenfolge zumindest teilweise verschiedenen Reihenfolge nebeneinander ausgebildet. Denkbar ist auch, dass die Reihenfolge der elektrischen Leiter der ersten Abfolge und der zweiten Abfolge gleich ist, wobei eine Wickelrichtung der ersten Abfolge verschieden von der Wickelrichtung der zweiten Abfolge ist.

Erfindungsgemäß ist vorgesehen, dass ein mehrteilig ausgebildetes Wickelschwert mit einem ersten Abschnitt und einem an den ersten Abschnitt in axialer Richtung des Wickelschwerts angrenzenden zweiten Abschnitt bereitgestellt wird, bei der Wicklung der elektrischen Leiter um das Wickelschwert der erste Abschnitt und der zweite Abschnitt in einer Ebene angeordnet sind, und die Längsachse des ersten Abschnitts und die Längsachse des zweiten Abschnitts parallel zueinander angeordnet sind, und zur Ausbildung der zweiten Abfolge der erste Abschnitt und/oder der zweite Abschnitt um deren jeweilige Längsrichtung verschwenkt werden, so dass die Längsachse des ersten Abschnitts mit der Längsachse des zweiten Abschnitts fluchtet, und die Summe der Verschwenkung des ersten Abschnitts und des zweiten Abschnitts 180° beträgt. Auf die Weise kann über die Verschwenkung der beiden Abschnitte relativ zueinander um die jeweilige Längsachse die Wickelrichtung der elektrischen Leiter zweier aufeinanderfolgender Abfolgen geändert werden, um die zweite Abfolge auszubilden.

Durch die zumindest teilweise Änderung der Reihenfolge der elektrischen Leiter in einer Abfolge der Mehrzahl der Wicklungsabfolgen oder der Wickelrichtungsänderung kann bei einer Anordnung der Endlos-Wellenwicklung in den Statornuten, insbesondere im Bereich des Lagensprungs, ein ungewolltes Vertauschen der Teilwicklungen der Wellenwicklung vermieden werden. Dies ist vorzugsweise erzielbar, wenn die Abfolge mit der geänderten Reihenfolge der elektrischen Leiter im Bereich des Lagensprungs ausgebildet ist.

Folglich wird ein Verfahren zur Herstellung einer Endlos-Wellenwicklung für einen Stator bereitgestellt, die ein symmetrisches Magnetfeld innerhalb des Stators ermöglicht und die Leistungsfähigkeit einer elektrischen Maschine erhöhen kann.

Eine vorteilhafte Weiterbildung der Erfindung liegt darin, dass zur Wicklung der elektrischen Leiter um das Wickelschwert, das Wickelschwert um dessen Längsachse verdreht und/oder das Wickelschwert in Längsrichtung des Wickelschwert vorgeschoben wird. Mit anderen Worten ist das Wickelschwert derart gelagert, dass es um dessen Längsachse verdrehbar ausgebildet ist. Ebenso kann das Wickelschwert eine Verlagerung in dessen Längsrichtung erfahren. Eine derartige Verlagerung wird auch als Vorschub bezeichnet und/oder verstanden.

In diesem Zusammenhang ist vorteilhaft vorgesehen, dass das Verdrehen des Wickelschwerts und das Vorschieben des Wickelschwerts abwechselnd und/oder zumindest zeitweise gleichzeitig erfolgt. Somit kann vorgesehen sein, dass zum Führen der elektrischen Leiter zwischen der ersten Kante und der zweiten Kante in einer Richtung senkrecht zur Längsrichtung des Wickelschwerts, das Wickelschwert ausschließlich verdreht wird. Zur Umlenkung der elektrischen Leiter im Bereich der ersten Kante und/oder der zweiten Kante kann vorgesehen sein, dass das Wickelschwert in dessen Längsrichtung verschoben und verdreht wird. Diese Vorgänge können nachgeschaltet, zeitgleich und/oder gleichzeitig erfolgen, um eine Wicklungsabfolge auszubilden.

Die Endlos-Wellenwicklung ist einteilig ausgebildet. Dies bedeutet, dass die Endlos-Wellenwicklung zwar eine Mehrzahl einzelner elektrischer Leiter aufweist, die zu einer entsprechenden Wellenwicklung ausgebildet ist, diese Endlos-Wellenwicklung aber nicht an eine andere Endlos-Wellenwicklung angesetzt und mit dieser stoffschlüssig verbunden ist.

Eine vorteilhafte Ausgestaltung der Endlos-Wellenwicklung liegt darin, dass die zweite Abfolge zwischen zwei ersten Abfolgen ausgebildet wird. Somit kann vorgesehen sein, dass eine Mehrzahl erster Abfolgen vorgesehen ist, in der die elektrischen Leiter in einer ersten Reihenfolge nebeneinander angeordnet sind. An diese Mehrzahl der ersten Abfolgen folgt eine zweite Abfolge, in welcher die elektrischen Leiter zumindest teilweise eine von der ersten Abfolge verschiedene Reihenfolge aufweisen. An die zweite Abfolge schließt sich wieder eine erste oder eine Mehrzahl erster Abfolgen an. Die zweite Abfolge kann innerhalb der Endlos-Wellenwicklung so positioniert werden, dass sie bei einer Anordnung der Endlos-Wellenwicklung in den Nuten eines Stators im Bereich des Lagensprungs angeordnet ist.

Zur Reduktion von Spannungen in den elektrischen Leitern während des Schwenkvorgangs zur Änderung der Wickelrichtung kann vorteilhaft vorgesehen sein, dass die elektrischen Leiter zumindest abschnittsweise erwärmt werden. Die Erwärmung erfolgt durch das gezielte Hinzufügen von Wärme von außerhalb. Vorzugsweise werden die elektrischen Leiter um mehr als 30°C bezogen auf die Ausgangstemperatur der elektrischen Leiter erwärmt. Besonders bevorzugt ist die Erwärmung größer 50°C vorgesehen, wobei die Grenzen jeweils mit eingeschlossen sind.

Die Erfindung betrifft zudem eine Endlos-Wellenwicklung für einen Stator einer elektrischen Maschine, hergestellt nach dem erfindungsgemäßen Verfahren.

In einer vorteilhaften Weiterbildung der Erfindung ist vorgesehen, dass die Mehrzahl der elektrischen Leiter eine erste Gruppe und eine zweite Gruppe von elektrischen Leitern aufweist, die erste Gruppe an die zweite Gruppe der elektrischen Leiter innerhalb einer Abfolge angrenzt, in der zweiten Abfolge die Reihenfolge der elektrischen Leiter der ersten Gruppe verschieden von der Reihenfolge der elektrischen Leiter der ersten Abfolge ist, und die Reihenfolge der elektrischen Leiter der zweiten Gruppe in der ersten Abfolge und der zweiten Abfolge gleich ist.

In diesem Zusammenhang ist vorteilhaft vorgesehen, dass im Vergleich zur Reihenfolge der elektrischen Leiter der ersten Gruppe der ersten Abfolge in der ersten Gruppe der zweiten Abfolge die Reihenfolge immer zweier aufeinanderfolgender elektrischer Leiter vertauscht wird.

Die Erfindung betrifft zudem einen Stator mit der erfindungsgemäßen Endlos-Wellenwicklung.

Zudem betrifft die Erfindung eine elektrische Maschine mit dem Stator, der die erfindungsgemäße Endlos-Wellenwicklung umfasst.

Weitere Merkmale der Erfindung ergeben sich aus den Unteransprüchen sowie den nachfolgenden Ausführungsbeispielen. Die Ausführungsbeispiele sind nicht als einschränkend, sondern als vielmehr als beispielhaft zu verstehen, sie sollen den Fachmann in die Lage versetzen, die Erfindung auszuführen. Die Anmelderin behält sich vor, einzelne oder mehrere der in den Ausführungsbeispielen offenbarten Merkmale zum Gegenstand von Patentansprüchen zu machen oder solche Merkmale in bestehende Patenansprüche aufzunehmen. Die Ausführungsbeispiele werden anhand von Figuren näher erläutert.

In diesem zeigen:
Fig. 1 eine Ansicht Endlos-Wellenwicklung aus dem Stand der Technik,
Fig. 2 eine Draufsicht auf einen Stator,
Fig. 3 eine Draufsicht auf die Endlos-Wellenwicklung,
Fig. 4 einen Querschnitt durch den Stator im Bereich eines Lagensprungs mit Blockbildung im Lagensprungbereich,
Figl. 5 einen Querschnitt durch den Stator im Bereich des Lagensprungs ohne Blockbildung im Lagensprungbereich,
Fig. 6 eine erste Abfolge zum Verschwenken der Endlos-Wellenwicklung,
Fig. 7 eine zweite Abfolge zum Verschwenken der Endlos-Wellenwicklung.

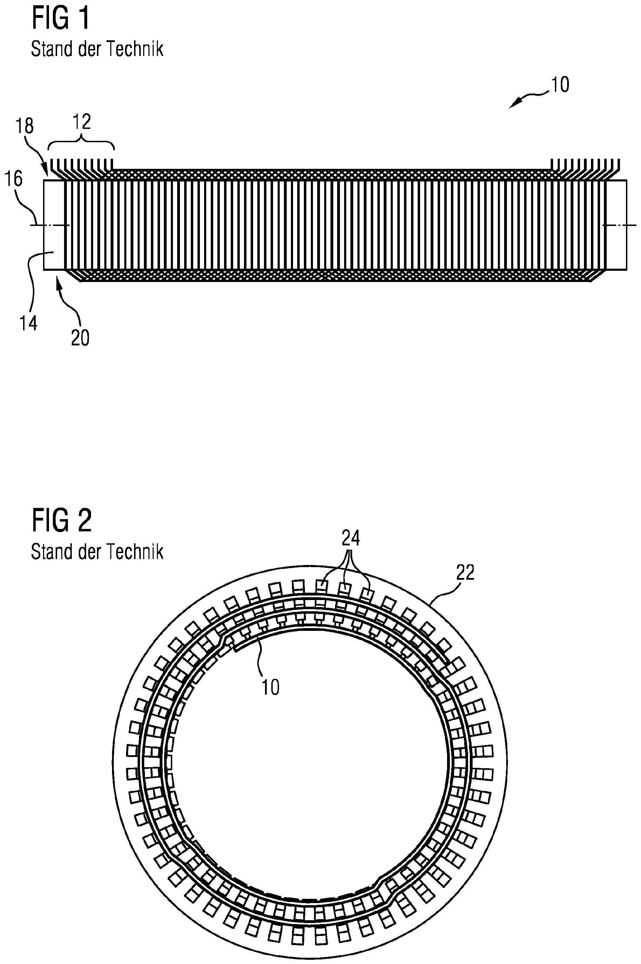

In Fig. 1 ist eine Endlos-Wellenwicklung 10 gezeigt, wie sie aus dem Stand der Technik bekannt ist. Die Endlos-Wellenwicklung 10 weist eine Mehrzahl elektrischer Leiter 12 auf, die um ein Wickelschwert 14 gewickelt sind. Das Wickelschwert 14 weist eine Längsachse 16 auf. Parallel zur Längsachse 16 verläuft eine erste Kante 18 und eine zur ersten Kante 18 beabstandet angeordnete zweite Kante 20. Die erste Kante 18 und die zweite Kante 20 sind somit ebenfalls parallel zueinander angeordnet.

Die elektrischen Leiter 12 sind in einer Wicklungsrichtung, um das Wickelschwert gewickelt, wobei die elektrischen Leiter 12 an und/oder durch die erste Kante 18 und die zweite Kante 20 umgelenkt werden. Die elektrischen Leiter 12 werden mehrfach um das Wickelschwert 14 gewickelt, so dass eine Mehrzahl von Wicklungsabfolgen, in Längsrichtung des Wickelschwerts 14 nebeneinander ausgebildet sind. Eine einzelne Wicklungsabfolge, weist somit die Mehrzahl der elektrischen Leiter 12 auf, die in Längsrichtung des Wickelschwerts 14 nebeneinander angeordnet werden.

Fig. 2 zeigt eine Draufsicht auf einen Stator 22 für eine elektrische Maschine mit der aus Fig. 1 bekannten Endlos-Wellenwicklung 10. Der Stator 22 ist hohlzylinderförmig ausgebildet und weist auf einer inneren Mantelfläche eine Mehrzahl von Nuten 24 auf, deren Tiefe sich in radialer Richtung des Stators 22 erstreckt. Die Nuten 24 verlaufen parallel zur Längsrichtung des Stators 22 zwischen einer ersten Stirnseite des Stators 22 und einer zur ersten Stirnseite in Längsrichtung des Stators 22 beabstandet angeordneten zweiten Stirnseite des Stators 22.

Die Endos-Wellenwicklung 10 ist in den Nuten 24 des Stators 22 angeordnet. Sie wird, ausgehend von einer Ausgangsnut in Umfangsrichtung des Stators 22 in die jeweiligen Nuten 24 angeordnet. Sobald die Ausgangsnut wieder erreicht ist, geht die Endos-Wellenwicklung 10 in die nächste Lage über. Dieser Übergang wird als Lagensprung 26 bezeichnet.

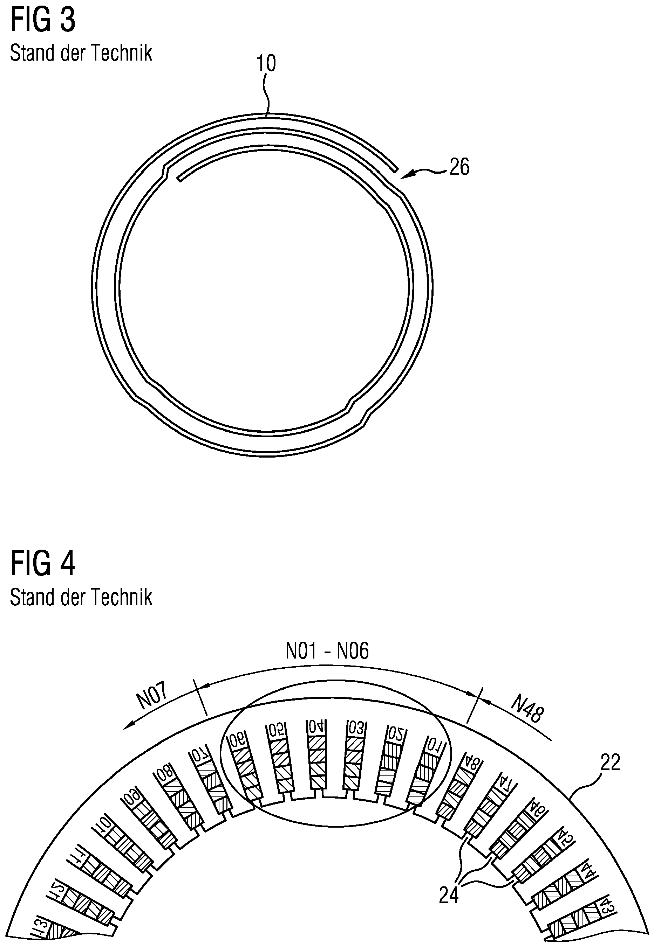

Fig. 3 zeigt eine Aufsicht der in dem Stator 22 angeordneten Endlos-Wellenwicklung 10 aus Fig. 2, wobei der Stator 22 ausgeblendet ist und ausschließlich die Endlos-Wellenwicklung 10 mit den Lagensprüngen 26 dargestellt ist.

In Fig. 4 ist ein Querschnitt durch den Stator 22 im Bereich des Lagensprungs 26 gezeigt. Bei einer Standard Endlos-Wellenwicklung 10, wie diese aus dem Stand der Technik bekannt ist, ist die Endlos-Wellenwicklung 10 derart in den Nuten 24 des Stators 22 angeordnet, dass die Reihenfolge von Teilwicklungen der Endlos-Wellenwicklung 10 im Bereich des Lagensprungs 26, hier die Nuten N01 bis N06, der in radialer Richtung nebeneinander angeordneten ersten Lage und der zweiten Lage, vertauscht ist. Bezogen auf eine Nut 24, fließt der Strom der in radialer Richtung nebeneinander angeordneten elektrischen Leiter 12 im Bereich des Lagensprungs 26 gleichzeitig in eine Richtung. Anders verhält es sich in den angrenzenden Nuten N07 bis N48. Hier fließt der Strom in den elektrischen Leitern 12 einer Nut 24 zweier aneinander angrenzender Lagen zeitversetzt in eine Richtung - also abwechselnd. Die Blockbildung des Stromflusses der aneinander angrenzenden Lagen im Bereich des Lagensprungs 26 führt zu einer Asymmetrie im Magnetfeld des Stators 22, wodurch die Leistungsfähigkeit der elektrischen Maschine reduziert sein kann.

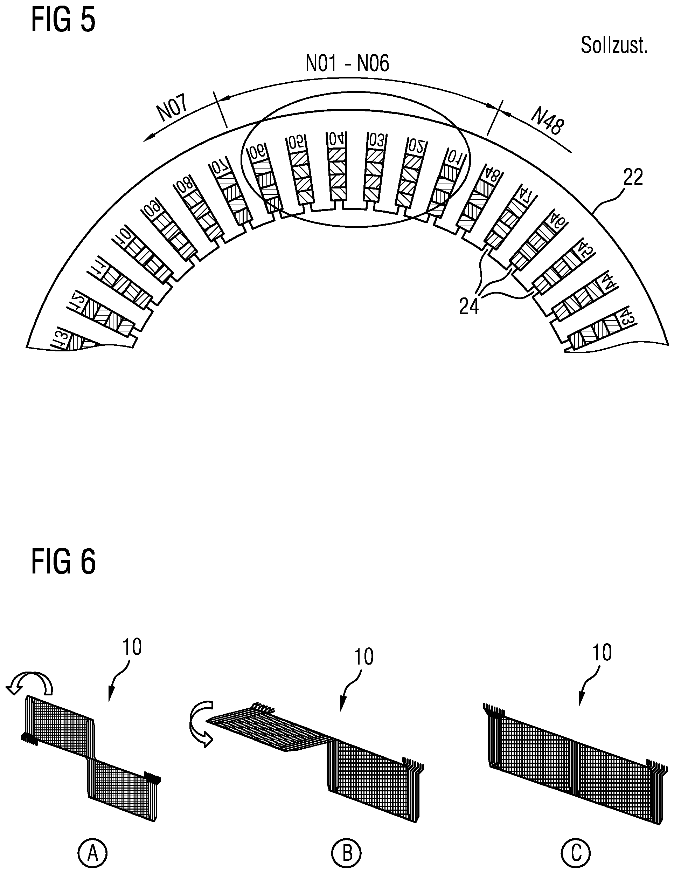

Fig. 5 zeigt den aus Fig. 4 bekannten Querschnitt des Stators 22, wobei im Bereich des Lagensprungs 26 und auch an den angrenzenden Nuten 24, also über alle Nuten 24 des Stators 22, die elektrischen Leiter 12 der jeweiligen angrenzenden Lagen einen abwechselnden Stromfluss haben. Dieses Zieldesign der Endlos-Wellenwicklung 10 kann auf unterschiedliche Weisen erreicht werden.

Es ist denkbar, dass die elektrischen Leiter 12 um das Wickelschwert 14 gewickelt werden, wobei die elektrischen Leiter 12 an und/oder durch die erste Kante 18 und die zweite Kante 20 umgelenkt werden. Die elektrischen Leiter 12 werden mehrfach um das Wickelschwert 14 gewickelt, so dass eine Mehrzahl von Wicklungsabfolgen, in Längsrichtung des Wickelschwerts 14 nebeneinander ausgebildet wird. Eine einzelne Wicklungsabfolge, weist somit die Mehrzahl der elektrischen Leiter 12 auf, die in Längsrichtung des Wickelschwerts 14 nebeneinander angeordnet werden. Die Mehrzahl der Wicklungsabfolgen umfasst wenigstens eine erste Abfolge und eine zweite Abfolge. In der ersten Abfolge wird die Mehrzahl der elektrischen Leiter 12 in einer ersten Reihenfolge nebeneinander angeordnet. In der zweiten Abfolge wird die Mehrzahl der elektrischen Leiter 12 in einer von der ersten Reihenfolge zumindest teilweise verschiedenen Reihenfolge nebeneinander ausgebildet.

Durch die Änderung der Reihenfolge der elektrischen Leiter 12 in einer Abfolge der Mehrzahl der Wicklungsabfolgen kann bei einer Anordnung der Endlos-Wellenwicklung in den Statornuten, insbesondere im Bereich des Lagensprungs 26, ein ungewolltes Vertauschen der Teilwicklungen der Wellenwicklung vermieden werden. Somit kann erzielt werden, dass die in radialer Richtung eines Stators 22 nebeneinander angeordneten elektrischen Leiter 12 der Endlos-Wellenwicklung 10 derart angeordnet werden, dass sie einer Phase zugehörend sind und abwechselnd Strom in einer Richtung führen.

Denkbar ist, dass die Mehrzahl der elektrischen Leiter 12 eine erste Gruppe und eine zweite Gruppe von elektrischen Leitern 12 aufweist, die erste Gruppe an die zweite Gruppe der elektrischen Leiter 12 innerhalb einer Abfolge angrenzt, in der zweiten Abfolge die Reihenfolge der elektrischen Leiter 12 der ersten Gruppe verschieden von der Reihenfolge der elektrischen Leiter 12 der ersten Abfolge ist, und die Reihenfolge der elektrischen Leiter 12 der zweiten Gruppe in der ersten Abfolge und der zweiten Abfolge gleich ist. Vorzugsweise ist im Vergleich zur Reihenfolge der elektrischen Leiter der ersten Gruppe der ersten Abfolge in der ersten Gruppe der zweiten Abfolge die Reihenfolge immer zweier aufeinanderfolgender elektrischer Leiter vertauscht.

Fig. 6 zeigt Verfahrensschritte zur Herstellung einer Endloswellenwicklung. Demnach wird ein mehrteilig ausgebildetes Wickelschwert 14 mit einem ersten Abschnitt und einem an den ersten Abschnitt in axialer Richtung des Wickelschwerts 14 angrenzenden zweiten Abschnitt bereitgestellt. Vor und/oder bei der Wicklung der elektrischen Leiter 12 um das Wickelschwert 14 sind der erste Abschnitt und der zweite Abschnitt in einer Ebene angeordnet sind, und die Längsachse des ersten Abschnitts und die Längsachse des zweiten Abschnitts sind parallel zueinander angeordnet. Zur Ausbildung der zweiten Abfolge werden der erste Abschnitt und/oder der zweite Abschnitt um deren jeweilige Längsrichtung verschwenkt, so dass die Längsachse des ersten Abschnitts mit der Längsachse des zweiten Abschnitts fluchtet, und die Summe der Verschwenkung des ersten Abschnitts und des zweiten Abschnitts 180° beträgt. Auf die Weise kann über die Verschwenkung der beiden Abschnitte relativ zueinander um die jeweilige Längsachse die Wicklungsrichtung der elektrischen Leiter zweier aufeinanderfolgender Abfolgen geändert werden, um die zweite Abfolge auszubilden.

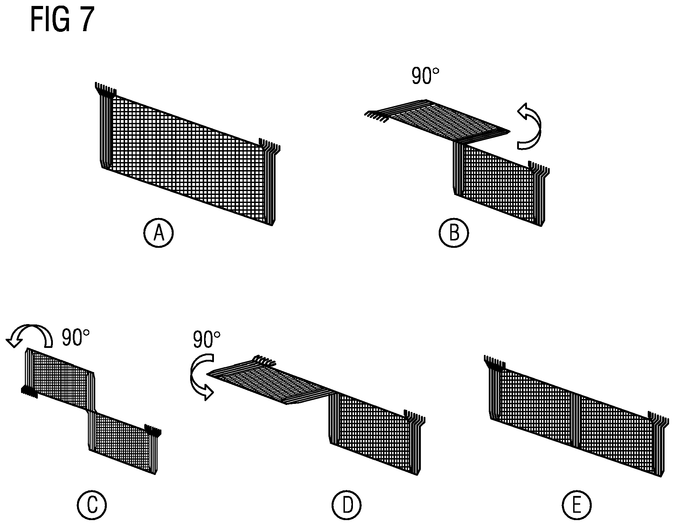

Fig. 7 zeigt Verfahrensschritte eines weiteren Ansatzes zur Herstellung einer Endloswellenwicklung. Demnach wird ein mehrteilig ausgebildetes Wickelschwert 14 mit einem ersten Abschnitt und einem an den ersten Abschnitt in axialer Richtung angrenzenden zweiten Abschnitt bereitgestellt wird, vor und/oder bei der Wicklung der elektrischen Leiter 12 um das Wickelschwert 14 sind der erste Abschnitt und der zweite Abschnitt in einer Ebene angeordnet, und die Längsachse des ersten Abschnitts und die Längsachse des zweiten Abschnitts sind zueinander koaxial angeordnet. Zur Ausbildung der zweiten Abfolge werden der erste Abschnitt und/oder der zweite Abschnitt um deren jeweilige Längsrichtung verschwenkt werden, so dass die Längsachse des ersten Abschnitts mit der Längsachse des zweiten Abschnitts fluchtet, und die Summe der Verschwenkung des ersten Abschnitts und des zweiten Abschnitts 360° beträgt. Somit kann über die Verschwenkung der beiden Abschnitte relativ zueinander um die jeweilige Längsachse der beiden Abschnitte die Wicklungsrichtung der elektrischen Leiter 12 zweier aufeinanderfolgender Abfolgen geändert werden, um die zweite Abfolge auszubilden.

## Patentansprüche

1. Verfahren zur Herstellung einer Endlos-Wellenwicklung (10) für einen Stator (22) einer elektrischen Maschine, umfassend die Schritte:
- Bereitstellen eines Wickelschwerts (14), das eine Längsachse (16) aufweist, und parallel zur Längsachse (16) eine erste Kante (18) und eine zweite Kante (20) angeordnet sind, wobei die erste Kante (18) und die zweite Kante (20) zueinander beabstandet ausgebildet sind;
- Bereitstellen einer Mehrzahl elektrischer Leiter (12);
- Wickeln der elektrischen Leiter (12) um das Wickelschwert (14), wobei die elektrischen Leiter (12) an der und/oder durch die erste Kante (18) und die zweite Kante (20) umgelenkt werden, und eine Mehrzahl von Wicklungsabfolgen, in Längsrichtung des Wickelschwerts (14) nebeneinander ausgebildet werden, in einer Wicklungsabfolge, die Mehrzahl der elektrischen Leiter (12) in Längsrichtung des Wickelschwerts (14) nebeneinander angeordnet werden, die Mehrzahl der Wicklungsabfolgen wenigstens eine erste Abfolge und eine zweite Abfolge aufweisen, in der ersten Abfolge die Mehrzahl der elektrischen Leiter (12) in einer ersten Reihenfolge nebeneinander angeordnet werden, und in der zweiten Abfolge
- die Mehrzahl der elektrischen Leiter (12) in einer von der ersten Reihenfolge zumindest teilweise verschiedenen zweiten Reihenfolge nebeneinander angeordnet werden, oder
- die Reihenfolge der elektrischen Leiter (12) der ersten Abfolge und der zweiten Abfolge gleich ist, wobei eine Wickelrichtung der ersten Abfolge um das Wickelschwert (14) verschieden von der Wickelrichtung der zweiten Abfolge ist, **dadurch gekennzeichnet, dass**
das Wickelschwert (14) mehrteilig ausgebildet ist und mit einem ersten Abschnitt und einem an den ersten Abschnitt in axialer Richtung angrenzenden zweiten Abschnitt bereitgestellt wird,
bei der Wicklung der elektrischen Leiter (14) um das Wickelschwert (14) der erste Abschnitt und der zweite Abschnitt in einer Ebene angeordnet sind, und die Längsachse des ersten Abschnitts und die Längsachse des zweiten Abschnitts parallel zueinander angeordnet sind, und
zur Ausbildung der zweiten Abfolge der erste Abschnitt und/oder der zweite Abschnitt um deren jeweilige Längsrichtung verschwenkt werden, so dass die Längsachse des ersten Abschnitts mit der Längsachse des zweiten Abschnitts fluchtet, und die Summe der Verschwenkung des ersten Abschnitts und des zweiten Abschnitts 180° beträgt.

2. Verfahren nach Anspruch 1, **dadurch gekennzeichnet, dass** zur Wicklung der elektrischen Leiter (12) um das Wickelschwert (14), das Wickelschwert (14) um dessen Längsachse (16) verdreht und/oder das Wickelschwert (14) in Längsrichtung des Wickelschwerts (14) vorgeschoben wird.

3. Verfahren nach Anspruch 2, **dadurch gekennzeichnet, dass** das Verdrehen des Wickelschwerts (14) und das Vorschieben des Wickelschwerts (14) abwechselnd und/oder zumindest teilweise zeitgleich und/oder gleichzeitig erfolgt.

4. Verfahren nach einem der vorstehenden Ansprüche, **dadurch gekennzeichnet, dass** die zweite Abfolge zwischen zwei ersten Abfolgen ausgebildet wird.

5. Verfahren nach einem der vorstehenden Ansprüche, **dadurch gekennzeichnet, dass** die elektrischen Leiter (12) zumindest abschnittsweise zur Ausbildung des zweiten Abschnitts erwärmt werden.

6. Endlos-Wellenwicklung für einen Stator (22) einer elektrischen Maschine, hergestellt nach einem der vorstehenden Ansprüche.

7. Endlos-Wellenwicklung nach Anspruch 6, **dadurch gekennzeichnet, dass** die Mehrzahl der elektrischen Leiter (12) eine erste Gruppe und eine zweite Gruppe von elektrischen Leitern aufweist, die erste Gruppe an die zweite Gruppe der elektrischen Leiter (12) innerhalb einer Abfolge angrenzt, in der zweiten Abfolge die Reihenfolge der elektrischen Leiter (12) der ersten Gruppe verschieden von der Reihenfolge der elektrischen Leiter (12) der ersten Abfolge ist, und die Reihenfolge der elektrischen Leiter (12) der zweiten Gruppe in der ersten Abfolge und der zweiten Abfolge gleich ist.

8. Endlos-Wellenwicklung nach Anspruch 6 oder 7, **dadurch gekennzeichnet, dass** im Vergleich zur Reihenfolge der elektrischen Leiter (12) der ersten Gruppe der ersten Abfolge in der ersten Gruppe der zweiten Abfolge die Reihenfolge zweier aufeinanderfolgender elektrischer Leiter (12) vertauscht wird.

9. Stator (22) mit einer Endlos-Wellenwicklung (10) nach einem der Ansprüche 6 bis 8.

10. Elektrische Maschine mit einem Stator (22) nach Anspruch 9.

## Claims

1. Method for producing an endless wave winding (10) for a stator (22) of an electric machine, comprising the steps:
- providing a winding blade (14) which has a longitudinal axis (16) and a first edge (18) and a second edge (20) are arranged parallel to the longitudinal axis (16), wherein the first edge (18) and the second edge (20) are formed at a distance from each other;
- providing a plurality of electrical conductors (12);
- winding the electrical conductors (12) around the winding blade (14), wherein the electrical conductors (12) are deflected at the and/or by the first edge (18) and the second edge (20), and a plurality of winding sequences are formed beside one another in the longitudinal direction of the winding blade (14), in a winding sequence, the plurality of electrical conductors (12) are arranged beside one another in the longitudinal direction of the winding blade (14), the plurality of winding sequences have at least one first sequence and a second sequence, in the first sequence, the plurality of electrical conductors (12) are arranged beside one another in a first order, and in the second sequence
- the plurality of electrical conductors (12) are arranged beside one another in a second order that is at least partly different from the first order, or
- the order of the electrical conductors (12) of the first sequence and of the second sequence is the same, wherein a winding direction of the first sequence around the winding blade (14) is different from the winding direction of the second sequence,
**characterized in that**
the winding blade (14) is formed in several parts and is provided with a first section and a second section adjoining the first section in the axial direction,
during the winding of the electrical conductors (14) around the winding blade (14), the first section and the second section are arranged in one plane, and the longitudinal axis of the first section and the longitudinal axis of the second section are arranged parallel to each other, and,
to form the second sequence, the first section and/or the second section are pivoted about their respective longitudinal direction, so that the longitudinal axis of the first section is aligned with the longitudinal axis of the second section, and the sum of the pivoting of the first section and of the second section is 180°.

2. Method according to Claim 1, **characterized in that**, to wind the electrical conductors (12) around the winding blade (14), the winding blade (14) rotates about its longitudinal axis (16) and/or the winding blade (14) is advanced in the longitudinal direction of the winding blade (14).

3. Method according to Claim 2, **characterized in that** the rotation of the winding blade (14) and the advancement of the winding blade (14) are carried out alternately and/or at least partly simultaneously and/or at the same time.

4. Method according to one of the preceding claims, **characterized in that** the second sequence is formed between two first sequences.

5. Method according to one of the preceding claims, **characterized in that** the electrical conductors (12) are heated at least in section in order to form the second section.

6. Endless wave winding for a stator (22) of an electric machine, produced according to one of the preceding claims.

7. Endless wave winding according to Claim 6, **characterized in that** the plurality of electrical conductors (12) has a first group and a second group of electrical conductors, the first group adjoins the second group of the electrical conductors (12) within a sequence, in the second sequence, the order of the electrical conductors (12) of the first group is different from the order of the electrical conductors (12) of the first sequence, and the order of the electrical conductors (12) of the second group in the first sequence and the second sequence is the same.

8. Endless wave winding according to Claim 6 or 7, **characterized in that**, as compared with the order of the electrical conductors (12) of the first group of the first sequence in the first group of the second sequence, the order of two successive electrical conductors (12) is transposed.

9. Stator (22) having an endless wave winding (10) according to one of Claims 6 to 8.

10. Electric machine having a stator (22) according to Claim 9.

## Revendications

1. Procédé de fabrication d'un enroulement ondulé continu (10) pour un stator (22) d'une machine électrique, comprenant les étapes suivantes :
- la fourniture d'une lame d'enroulement (14), qui présente un axe longitudinal (16), et un premier bord (18) et un deuxième bord (20) sont agencés parallèlement à l'axe longitudinal (16), le premier bord (18) et le deuxième bord (20) étant réalisés à distance l'un de l'autre ;
- la fourniture d'une pluralité de conducteurs électriques (12) ;
- l'enroulement des conducteurs électriques (12) autour de la lame d'enroulement (14), les conducteurs électriques (12) étant déviés sur et/ou par le premier bord (18) et le deuxième bord (20), et une pluralité de séquences d'enroulement étant réalisées côte à côte dans la direction longitudinale de la lame d'enroulement (14) ; dans une séquence d'enroulement, la pluralité de conducteurs électriques (12) étant agencés côte à côte dans la direction longitudinale de la lame d'enroulement (14), la pluralité de séquences d'enroulement présentant au moins une première séquence et une deuxième séquence ; dans la première séquence, la pluralité de conducteurs électriques (12) étant agencés côte à côte dans un premier ordre, et dans la deuxième séquence
- la pluralité de conducteurs électriques (12) étant agencés côte à côte dans un deuxième ordre au moins partiellement différent du premier ordre, ou
- l'ordre des conducteurs électriques (12) de la première séquence et de la deuxième séquence étant identique, une direction d'enroulement de la première séquence autour de la lame d'enroulement (14) étant différente de la direction d'enroulement de la deuxième séquence,
**caractérisé en ce que**
la lame d'enroulement (14) est réalisée en plusieurs parties et est fournie avec une première section et une deuxième section adjacente à la première section dans la direction axiale,
lors de l'enroulement des conducteurs électriques (14) autour de la lame d'enroulement (14), la première section et la deuxième section sont agencées dans un plan, et l'axe longitudinal de la première section et l'axe longitudinal de la deuxième section sont agencés parallèlement l'un à l'autre, et
pour réaliser la deuxième séquence, la première section et/ou la deuxième section sont pivotées autour de leur direction longitudinale respective, de telle sorte que l'axe longitudinal de la première section est aligné avec l'axe longitudinal de la deuxième section, et la somme du pivotement de la première section et de la deuxième section est de 180°.

2. Procédé selon la revendication 1, **caractérisé en ce que**, pour enrouler les conducteurs électriques (12) autour de la lame d'enroulement (14), la lame d'enroulement (14) est tournée autour de son axe longitudinal (16) et/ou la lame d'enroulement (14) est avancée dans la direction longitudinale de la lame d'enroulement (14).

3. Procédé selon la revendication 2, **caractérisé en ce que** la rotation de la lame d'enroulement (14) et l'avancement de la lame d'enroulement (14) sont effectués alternativement et/ou au moins partiellement simultanément et/ou en même temps.

4. Procédé selon l'une quelconque des revendications précédentes, **caractérisé en ce que** la deuxième séquence est réalisée entre deux premières séquences.

5. Procédé selon l'une quelconque des revendications précédentes, **caractérisé en ce que** les conducteurs électriques (12) sont chauffés au moins par sections pour réaliser la deuxième section.

6. Enroulement ondulé continu pour un stator (22) d'une machine électrique, fabriqué selon l'une quelconque des revendications précédentes.

7. Enroulement ondulé continu selon la revendication 6, **caractérisé en ce que** la pluralité de conducteurs électriques (12) présente un premier groupe et un deuxième groupe de conducteurs électriques, le premier groupe est adjacent au deuxième groupe de conducteurs électriques (12) au sein d'une séquence ; dans la deuxième séquence, l'ordre des conducteurs électriques (12) du premier groupe est différent de l'ordre des conducteurs électriques (12) de la première séquence, et l'ordre des conducteurs électriques (12) du deuxième groupe est le même dans la première séquence et dans la deuxième séquence.

8. Enroulement ondulé continu selon la revendication 6 ou 7, **caractérisé en ce que**, en comparaison de l'ordre des conducteurs électriques (12) du premier groupe de la première séquence, l'ordre de deux conducteurs électriques (12) successifs est inversé dans le premier groupe de la deuxième séquence.

9. Stator (22) avec un enroulement ondulé continu (10) selon l'une quelconque des revendications 6 à 8.

10. Machine électrique avec un stator (22) selon la revendication 9.
